Europäisches Patentamt

European Patent Office

Office européen des brevets

(11) Publication number: **0 238 047 B1**

# EUROPEAN PATENT SPECIFICATION

(45) Date of publication of patent specification: **08.06.94**  (51) Int. Cl.5: **G11B 5/64**, H01F 10/20

(21) Application number: **87103865.9**

(22) Date of filing: **17.03.87**

(54) **Magnetic storage medium with perpendicular anisotropy.**

(30) Priority: **18.03.86 JP 60184/86**
**22.09.86 JP 224214/86**

(43) Date of publication of application:
**23.09.87 Bulletin 87/39**

(45) Publication of the grant of the patent:
**08.06.94 Bulletin 94/23**

(84) Designated Contracting States:
**BE DE FR GB IT NL**

(56) References cited:
**EP-A- 0 122 030**
**DE-A- 3 710 477**

**Kirk-Othmers's Encyclopedia of Chemical Technology, 3rd.ed., Vol. 14 (1981), p.687**

**Ullmanns Encyklopädie der Technischen Chemie ,4th. ed., Vol.16, p. 362 (1978)**

(73) Proprietor: **KANEGAFUCHI KAGAKU KOGYO KABUSHIKI KAISHA**
**2-4 Nakanoshima 3-chome**
**Kita-ku Osaka-shi Osaka-fu 530(JP)**

(72) Inventor: **Nasu, Shogo**
**6-520, Maikodai 6-chome**
**Tarumi-ku**
**Kobe-shi Hyogo-ken(JP)**
Inventor: **Saiki, Koji**
**6-1-121, Kitajo-cho 4-chome**
**Toyonaka-shi Osaka-fu(JP)**

(74) Representative: **VOSSIUS & PARTNER**
**Postfach 86 07 67**
**D-81634 München (DE)**

**Description**

The present invention relates to a perpendicular magnetic storage medium and more particularly to a perpendicular magnetic storage medium used in the form of a card, a tape, a disc or the like, wherein there is formed a perpendicular magnetic anisotropic film made of (1) a sub-oxide of a metal comprising Fe and Co, or (2) a sub-oxide of a metal comprising Fe, Co and at least one metal other than the above two, which is suitable for high density recording.

Hitherto, perpendicular magnetic storage mediums have been effectively used for high-density magnetic storage. The magnetic storage mediums used for such purposes utilize a thin magnetic film which has an easy magnetization axis at right angles to the plane of the film. For the magnetic film for the above use, one has used or tested a thin film of Co-Cr (Co-Cr alloy), $Fe_3O_4$ or $O_s\text{-}\gamma Fe_2O_3$ produced using the sputtering method or the vacuum deposition method, a thin film of barium-ferrite produced using the coating method or the sputtering method, and the like.

Further, in order to improve the recording/reproducing sensitivity of a thin magnetic film, the application of a double-layer film construction was proposed, wherein a soft magnetic layer is provided between the substrate and the perpendicular magnetic anisotropic film, in a perpendicular magnetic storage medium. The above proposal was given in Japanese Examined Patent Publication No. 91/1983. For instance, a perpendicular magnetic storage medium of a double-layer film construction which uses a perpendicular magnetic anisotropic film of Co-Cr has a recording/reproducing sensitivity ten times higher than that of the same film of a single-layer construction.

However, the above conventional perpendicular magnetic storage mediums have drawbacks, as described hereinafter.

The thin magnetic film of Co-Cr alloy used in the above conventional medium must have a structure similar to that of a single crystal. Therefore, the substrate on which the thin magnetic film is formed should be heated to more than 100°C and frequently more than 200°C during the deposition thereon. This requires the use of a heat-resistant substrate and consequently increases the production costs. Further, a film of metal has the intrinsic drawback of being apt to wear down.

The thin magnetic film of the metal oxide, such as $Fe_3O_4$ and $O_s\text{-}\gamma Fe_2O_3$, is hard and has high wear-resistance. But, since the substrate for the thin magnetic film of $Fe_3O_4$ or $O_s\text{-}\gamma Fe_2O_3$ also has to be heated to over 250°C during the deposition thereon, the production costs are increased as is the case in the above Co-Cr alloy film. Further, the metal oxide, such as $O_s\text{-}\gamma Fe_2O_3$ or the like, used for the thin magnetic film sometimes calls for a reduction process. Still further, the perpendicular magnetic storage medium using these thin magnetic films of the metal oxide has the drawback of having low saturation magnetization (Ms). It is therefore impossible to obtain mediums having high recording/reproducing sensitivity.

The thin film of barium-ferrite obtained by the coating method for the perpendicular magnetic storage medium entails the provision of providing barium-ferrite powder having a uniform particle diameter of about 0.1 $\mu$m during the forming of the film. Accordingly, production costs are higher. Further, because a binder has to be added to form the film, the content of barium-ferrite in the film is lowered. This leads to low saturation magnetization (Ms) of the thin magnetic film, and consequently lowers the performance of the magnetic storage medium.

The thin film of barium-ferrite obtained using the sputtering method has saturation magnetization higher than that obtained using the coating method, but the substrate therefor should be heated to about 500°C. Accordingly, the substrate must be highly heat-resistant, and the use of an inexpensive plastic substrate is not allowed.

The perpendicular magnetic storage medium having a double-layer film construction, wherein a soft magnetic film is provided between the substrate and the perpendicular magnetic anisotropic film in order to improve the recording/reproducing sensitivity when recording information onto the thin magnetic film and reading it from the film, also has a drawback because the specifications of the two films often restrict each other on account of their individual characteristics as crystals. For example, in the perpendicular magnetic anisotropic film of Co-Cr alloy, the crystal axis hcp ⟨001⟩ has to be oriented at right angles to the film surface. For this purpose, the soft magnetic film should be strictly specified as a kind of a material, a configuration of a crystal, a lattice constant and a degree of orientation.

A perpendicular magnetic anisotropic film of a sub-oxide of Co is proposed as an effective way of removing the above drawbacks. This film can be formed at a low substrate temperature, which means that the use of a low heat-resistant and inexpensive film substrate is allowed. Furthermore this perpendicular magnetic anisotropic film has high perpendicular magnetic anisotropy, whereby a perpendicular magnetic anisotropic film having high saturation magnetization (Ms) can be obtained. But, there is the problem of the perpendicular magnetic anisotropic film of a sub-oxide of Co not having high recording/reproducing (reading) sensitivity.

Further,the inventors propose a perpendicular magnetic anisotropic film of a sub-oxide of Fe. This film can also be formed at a low substrate temperature. But the film of a sub-oxide of Fe has neither sufficient perpendicular magnetic anisotropy, nor high saturation magnetization (Ms).

Still further, there has been proposed a perpendicular magnetic anisotropic film of a sub-oxide of Co-Fe or Co-Fe-Ni. This film can be produced at a low substrate temperature, but the recording/reproducing sensitivity thereof is not high.

It should be noted that the perpendicular magnetic anisotropic film of the above sub-oxides has the advantage of being highly flexible due to the metals contained therein and of having high wear resistance.

EP-A-122 030 discloses a magnetic recording medium with a substrate and a perpendicular magnetic anisotropic film formed on the substrate.

The present invention was made to solve the above-mentioned problem in the conventional perpendicular magnetic anisotropic films themselves, and the problem of a perpendicular magnetic anisotropic film and a soft magnetic layer being mutually restricted. An object of the present invention is to provide a perpendicular magnetic storage medium having a perpendicular magnetic anisotropic film, which can be produced easily and economically at a low substrate temperature, and which also has high wear-resistance, high oxidation-resistance, high recording/reproducing sensitivity and high recording density, and further which calls for less reciprocal restrictions than a soft magnetic layer by applying a double-layer construction wherein the soft magnetic layer is used. This object is solved with the features of the claims.

A perpendicular magnetic storage medium as disclosed comprises a substrate and a perpendicular magnetic anisotropic film formed on the substrate is provided, wherein the perpendicular magnetic anisotropic film is a film of a sub-oxide of a metal of the composition described by the general formula $[(Fe_{1-x}Co_x)_{1-y}M_y]_{1-z}O_z$ (where $0.01 \leq x \leq 0.75$, $0 < y \leq 0.30$, $0.05 \leq z \leq 0.50$ and M means at least one metal excluding Fe and Co ); and has an easy magnetization axis at right angles to the plane thereof, and both a peak of diffracted X-ray intensity caused by oxidized Fe and a peak of diffracted X-ray intensity caused by Fe and Co in metal state.

In the above sub-oxide, most of Co remains in a metal state and some of Fe becomes FeO.

The perpendicular magnetic anisotropic film contains a metal M as a third component to improve the oxidation-resistance thereof. M is selected from the group consisting of Al, Cr, Mo, Ti and Zr. When Al, Cr, Mo, Ti or Zr are added to Fe and Co, the oxidation-resistance of the perpendicular magnetic anistropic film can be considerably improved. Metals other than the above-mentioned can be added as long as they do not eliminate the desirable characteristics of the perpendicular magnetic storage medium of the present invention.

The rf-sputtering method or the rf-magnetron sputtering method are especially effective in forming the perpendicular magnetic anisotropic film of the present invention.

Further, when a double-layer construction, wherein a soft magnetic layer is provided between the substrate and the perpendicular magnetic anisotropic film, is applied to the perpendicular magnetic storage medium of the present invention, the recording/reproducing sensitivity is further improved.

Fig. 1 is a graph showing the relationship between saturation magnetization (Ms) and the ratio of Co (atomic ratio x) to the total amount of Fe and Co in a perpendicular magnetic anisotropic film formed by means of the sputtering method with the proviso that the partial pressure of $O_2$ is 0.06 Pa ($4.5 \times 10^{-4}$ Torr);

Fig. 2 is a graph showing the relationship between the perpendicular coercive force (Hcl) and the ratio of Co (atomic ratio x) in a perpendicular magnetic anisotropic film formed under the same conditions as in Fig. 1;

Fig. 3 is a graph showing the relationship between the perpendicular anisotropic magnetic field (Hk) and the ratio of Co (atomic ratio x) in a perpendicular magnetic anisotropic film formed under the same conditions as in Fig. 1;

Fig. 4 is a graph showing the relationship between the perpendicular anisotropic magnetic field (Hk) and the content of oxygen (atomic ratio z) in a perpendicular magnetic anisotropic film wherein the ratio of Co to the total amount of Fe and Co is 0.3 atomic ratio (x);

Fig. 5 is a graph showing the relationship between saturation magnetization (Ms) and the content of oxygen (atomic ratio z) in a perpendicular magnetic anisotropic film formed under the same conditions as in Fig. 4;

Fig. 6 is a graph showing the relationship between the perpendicular coercive force (Hcl) and the content of oxygen (atomic ratio z) in a perpendicular magnetic anisotropic film formed under the same conditions as in Fig. 4;

3

EP 0 238 047 B1

Fig. 7a is a graph showing the result of a spectrum analysis of Fe by means of the XPS method in the perpendicular magnetic anisotropic film of the present invention, wherein the ratio of Co (X) is 0.55 and the ratio of oxygen (Z) changes;

Fig. 7b is a graph showing the result of a spectrum analysis of Co by means of the XPS method in the perpendicular magnetic anisotropic film of the present invention, wherein the ratio of Co (X) is 0.55 and the ratio of oxygen (Z) changes;

Fig. 8 is a graph showing the values of saturation magnetization (Ms), perpendicular coercive force (Hcl) and anisotropic magnetic field (Hk) of the perpendicular magnetic anisotropic film of the present invention, wherein the ratio of Co (X) is 0.55 and the ratio of oxygen (Z) changes;

Fig. 9 is a graph showing the result of an X-ray diffraction spectrum of the perpendicular magnetic anisotropic film of the present invention, wherein the ratio of Co (X) is 0.55 and the ratio of oxygen (Z) changes;

Fig. 10 is a graph showing the result of an X-ray diffraction spectrum of the perpendicular magnetic anisotropic film obtained in Example 1;

Fig. 11 is a graph showing the magnetization-hysteresis curve of the perpendicular magnetic anisotropic film obtained in Example 1;

Fig. 12 is a graph showing the recording density/reproducing output characteristic of the perpendicular magnetic storage medium obtained in Example 1;

Fig. 13a is a graph showing the result of the spectrum analysis of Fe using the XPS method, caused by the 2P electron orbit of a perpendicular magnetic anisotropic film obtained in Example 3;

Fig. 13b is a graph showing the result of the spectrum analysis of Co using the XPS method, caused by the 2P electron orbit of the perpendicular magnetic anisotropic film obtained in Example 3;

Fig. 14 is a graph showing the relationship between the perpendicular coercive force (Hcl) and the heat-treating time in air of a temperature at 240°C with respect to the perpendicular magnetic anisotropic film in Examples 4 to 9 wherein the content of additional metal is less than 30 atomic % to the total amount of metal component; and

Fig. 15 is a graph showing the relationship between the perpendicular anisotropic magnetic field (Hk) and the heat-treating time in air of a temperature at 240°C with respect to the perpendicular magnetic anisotropic film as in Fig. 14.

There is explained hereinafter a perpendicular magnetic anisotropic film of the present invention. To begin with, the macroscopic construction thereof is explained.

The perpendicular magnetic anisotropic film of the present invention can be described by the general formula $[(Fe_{1-x}Co_x)_{1-y}M_y]_{1-z}O_z$. High perpendicular magnetic anisotropy of the film can be obtained when "x" and "z" satisfy the relationships of $0.01 \leq x \leq 0.75$ and $0.05 \leq z \leq 0.50$, respectively.

The preferable value of x, namely the ratio of the number of Co atoms to the total number of Fe atoms and Co atoms in the film, differs depending on the value of z, namely the ratio of oxygen atoms in the film. A suitable amount of Co atoms in the film increases the perpendicular anisotropic magnetic field (Hk), saturation magnetization (Ms) and perpendicular coercive force (Hcl) of the film in comparison to a perpendicular magnetic anisotropic film composed solely of a sub-oxide of Fe. However, an excessive value of x will decrease the perpendicular coercive force (Hcl), saturation magnetization (Ms) and the perpendicular anisotropic magnetic field (Hk), and will also cause undesirable perpendicular rectangular characteristics. Consequently the functions required of a perpendicular magnetic anisotropic film are lost.

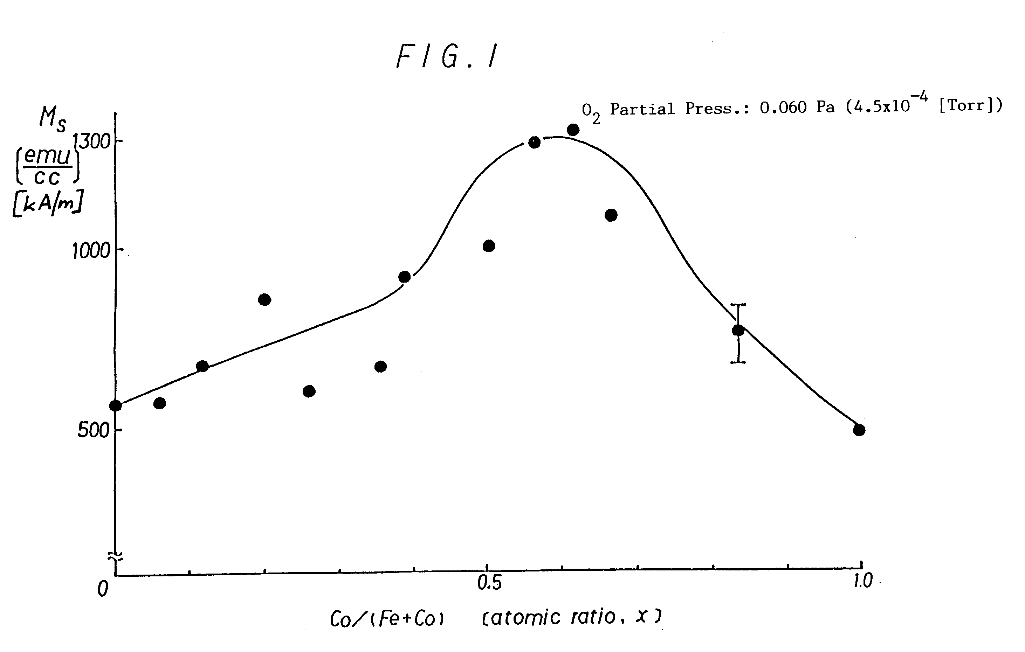

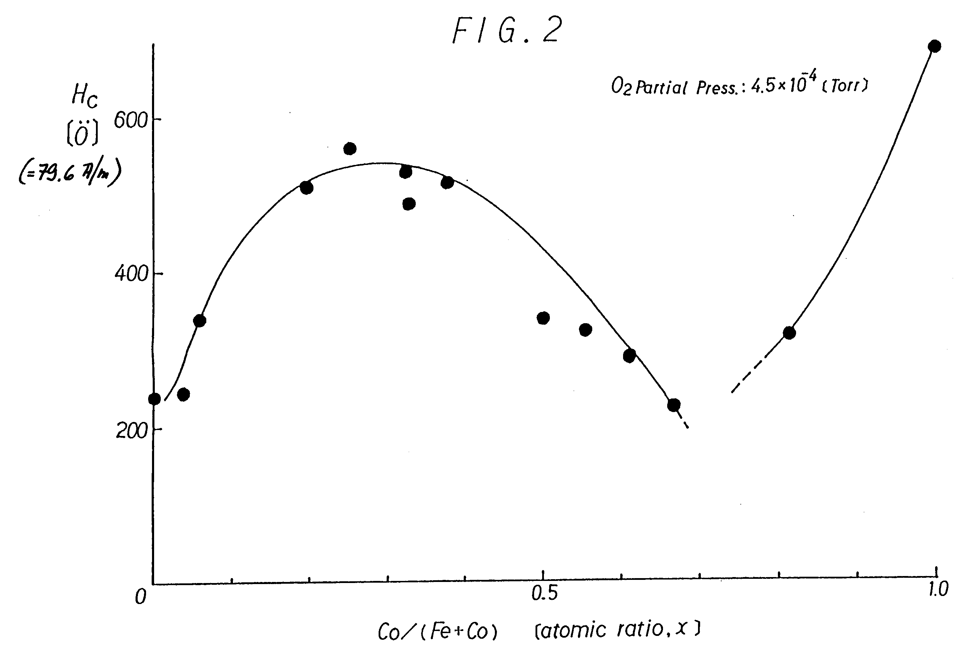

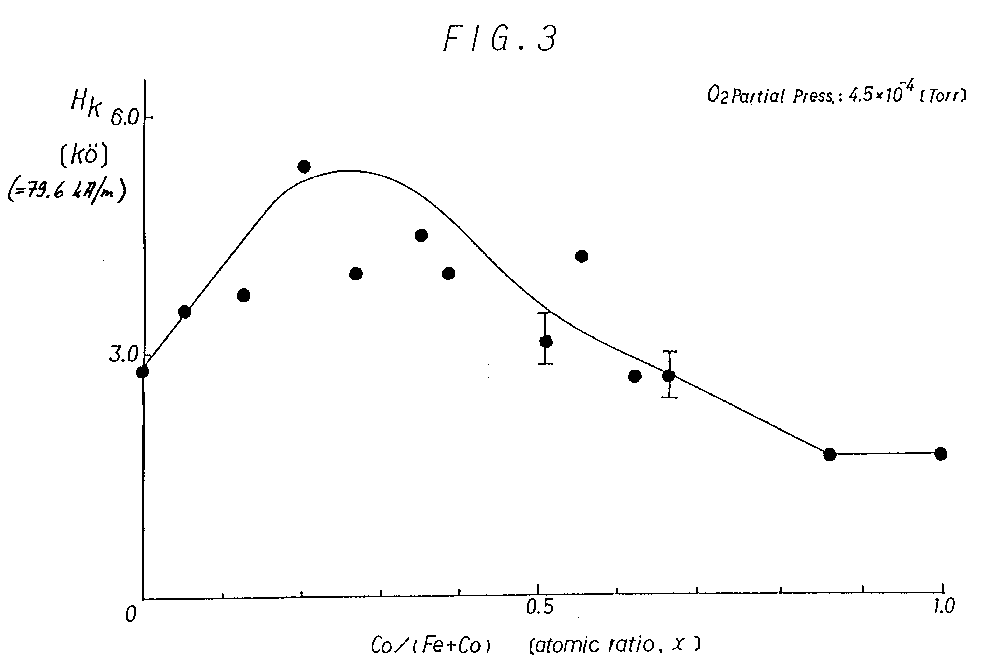

These facts can be observed from Figs. 1 to 3. Figs. 1 to 3, repectively, illustrate changes of the values of saturation magnetization (Ms), the perpendicular coercive force (Hcl) and the perpendicular anisotropic magnetic field (Hk) of the perpendicular magnetic anisotropic film corresponding to the change in x, i.e. the ratio of the number of Co atoms to the total number of Fe atoms and Co atoms, under the condition that the partial pressure of oxygen is 0.06 Pa ($4.5 \times 10^{-4}$ Torr).

The preferable range of x differs depending on the value of z which corresponds to the partial pressure. However, generally speaking, the preferred value of x is about 0.75, and a particularly preferable range of x is from about 0.2 to about 0.6.

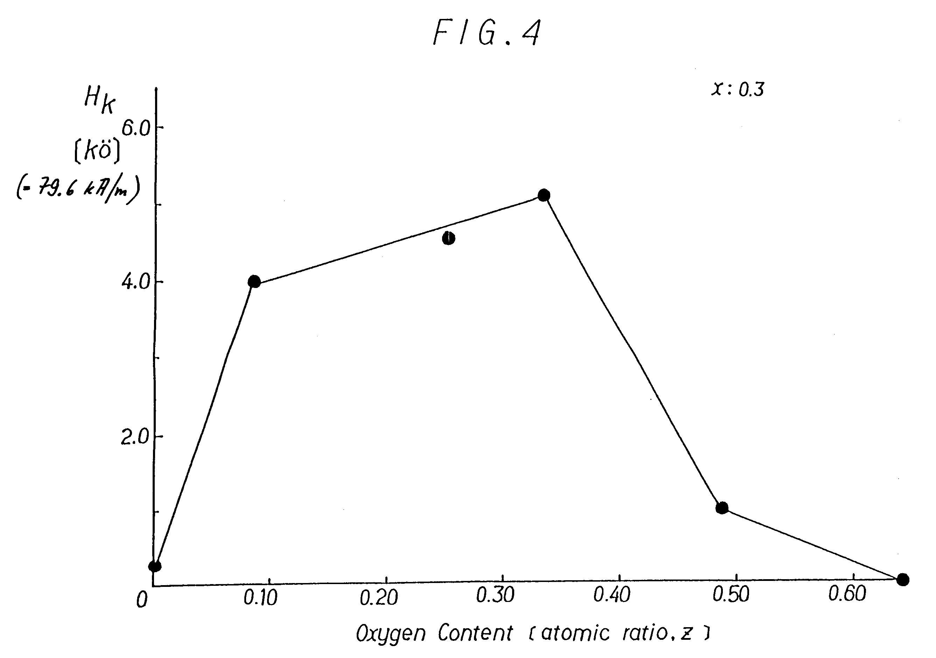

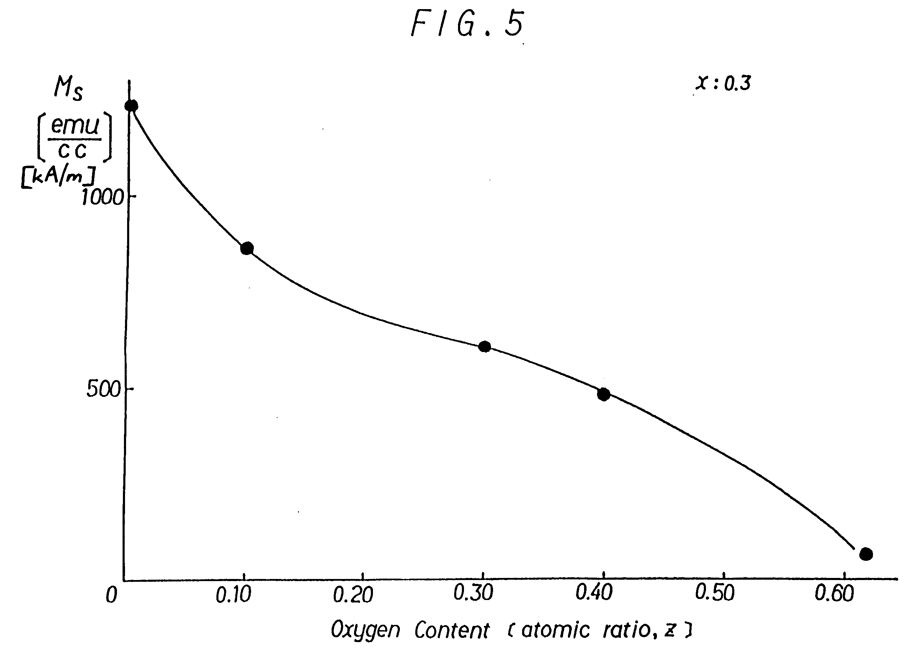

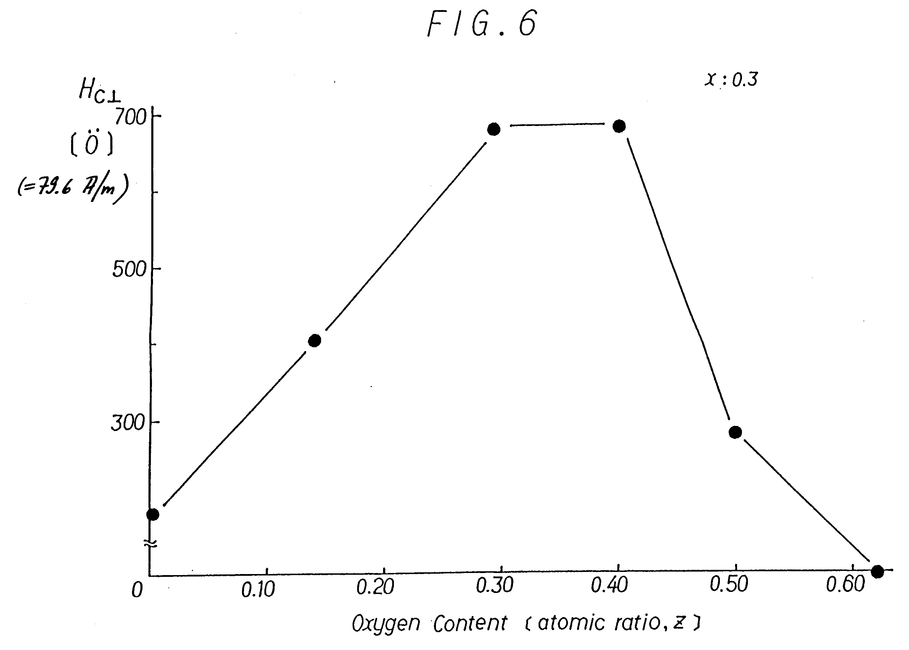

Vice versa, the preferable range of z differs depending on the value of x. However, generally speaking, a value of z larger than about 0.50 causes too low saturation magnetization (Ms) of the perpendicular magnetic anisotropic film. On the other hand, a value of z smaller than about 0.05 generally leads to a weak perpendicular anisotropic magnetic field (Hk) and the film loses its perpendicular magnetic anisotropy. Generally, the preferable range of z is from about 0.1 to about 0.4. These facts are supported by Figs. 4 to 6 which show the correlations between the oxygen content z and the above properties, i.e. the perpendicular anisotropic magnetic field (Hk), saturation magnetization (Ms) and the perpendicular coercive force (Hcl) when x is 0.3. The most preferable range of z can be determined by a state of sub-oxidation of Fe-Co in the

4

above preferable range. The most preferable range of z is such range wherein more than 80 % of Co is in a metal state and over about 30 % of Fe is oxidized to form FeO, as will be explained later.

Using the X-ray photoelectron spectroscopy (XPS) method, the above condition of sub-oxidation can be determined by analyzing perpendicular magnetic anisotropic films comprising sub-oxides of Fe, Co and a metal M prepared with different values of z.

For the above purpose, the experiment as described below was carried out.

Four samples were produced wherein the value of x was fixed at 0.55 for all samples, the value of y was 0 and the values of z were 0.09, 0.12, 0.19 and 0.33, respectively. These samples were then analyzed using the XPS method. The value of z can be controlled by varying the partial pressure of oxygen when forming the above samples, i.e. perpendicular magnetic anisotropic films, by means of the sputtering method.

The above samples were etched to a depth of about 0.03$\mu$m (300 Å) below the film surfaces by using an argon-ion-beam prior to XPS analyzing in order to remove the oxides on the film surfaces.

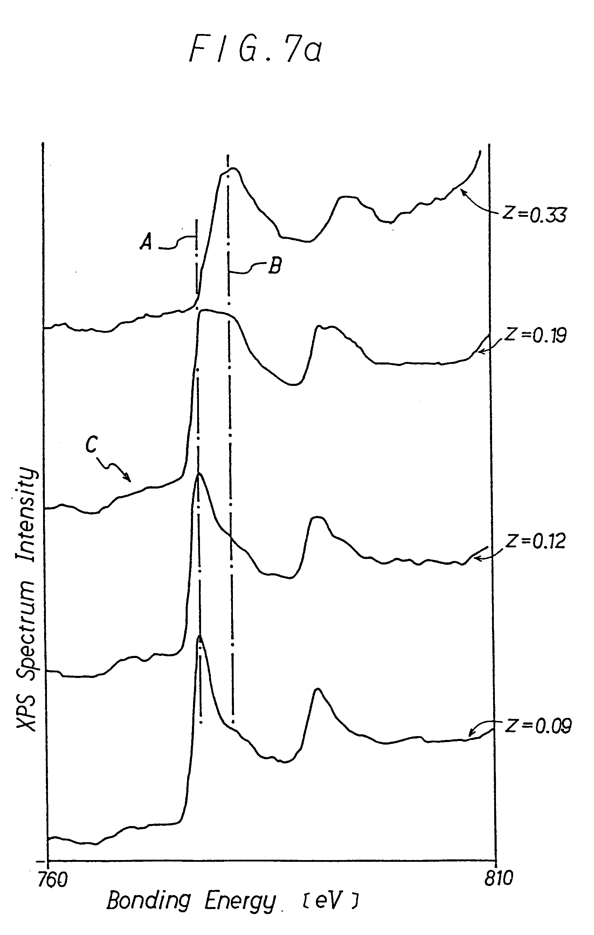

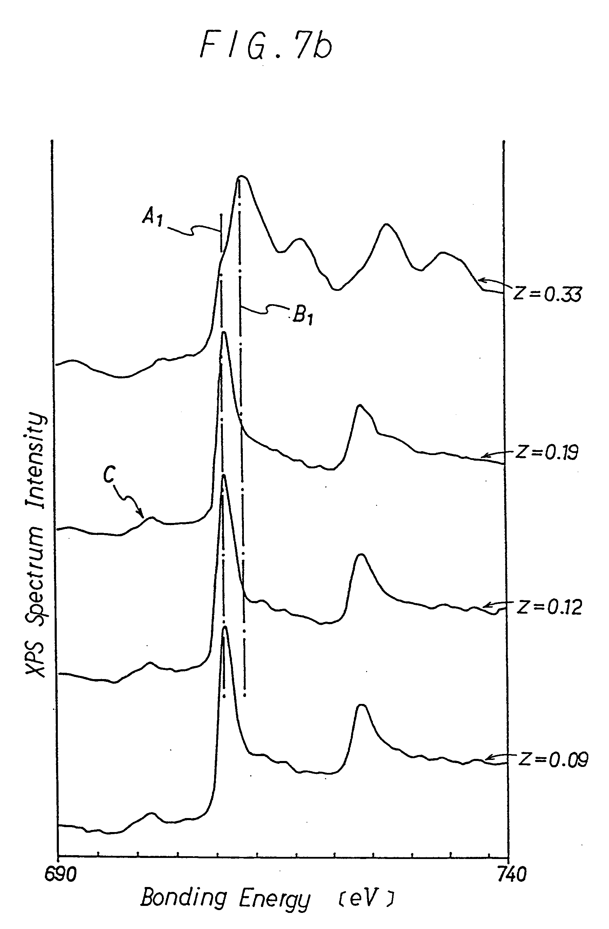

The spectra of Fe and the Co 2p orbits in the above samples were analyzed by the XPS method and are shown in Fig. 7a and Fig. 7b.

In Fig. 7a, the spectrum intensity has a peak caused by the electron orbit 2p 3/2 of O-valent Fe (Fe in a metal state) at a position indicated by line A, and a peak caused by the electron orbit 2p 3/2 of bivalent or trivalent Fe at a position indicated by line B.

In Fig. 7b, the spectrum intensity has a peak caused by the electron orbit 2p 3/2 of O-valent Co (Co in a metal state) at a position indicated by line A1 and a peak caused by the electron orbit 2p 3/2 of bivalent or trivalent Co at a position indicated by line B1.

The ratios of the oxides in Fe and in Co, respectively, can be taken from these peak values of the spectrum intensity. The ratio of oxygen atoms in the film, i.e. the value of z, can be taken from the peak values caused by the electron orbit 3p 3/2 of Fe, the electron orbit 3p 3/2 of Co and the electron orbit 1s of oxygen obtained from these spectra, and by considering a sensitivity correction value to compensate the characteristics of the measuring device.

The ratios of the oxides in Fe and in Co, respectively, contained in the four samples, the ratios of which correspond to the values of z, are shown in Table 1.

Table 1

| Value z | Ratio of oxide in Fe | Ratio of oxide in Co |
|---|---|---|
| 0.09 | about 15 % | 0 |
| 0.12 | about 25 % | 0 |
| 0.19 | about 40 % | about 7 % |
| 0.33 | about 95 % | about 85 % |

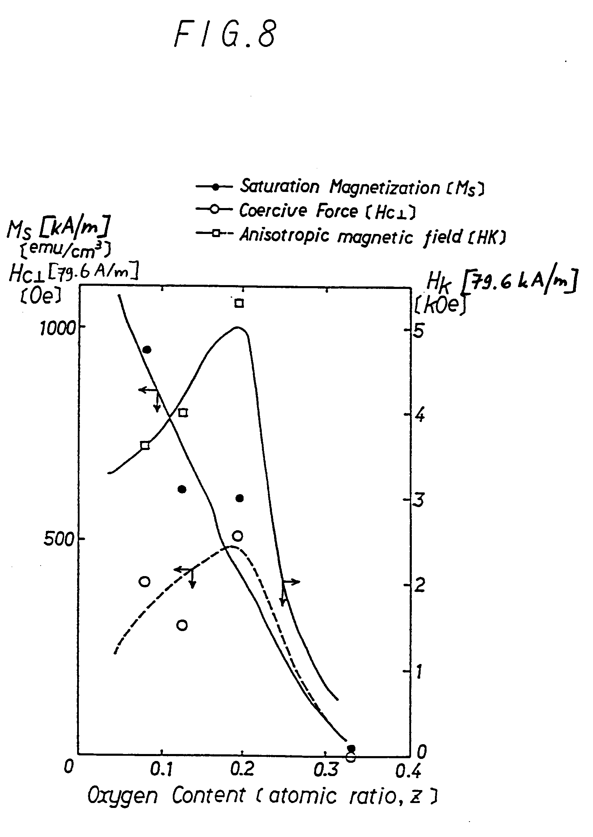

Fig. 8 shows the relationship between the value of z in these samples and the magnetic properties thereof, i.e. saturation magnetization (Ms), perpendicular coercive force (Hcl) and the perpendicular anisotropic magnetic field (Hk).

In Fig. 8, it is observed that the perpendicular anisotropic magnetic field (Hk) and the coercive force (Hcl) have a peak at z = 0.19, while saturation magnetization (Ms) of a magnetic film steadily decreases with the proceeding of oxidation. Thus maximum perpendicular magnetic anisotropy among these samples is obtained when about 40 % of Fe is oxidized and most of Co remains unoxidized.

It should again be said that the optimum value of z differs depending on the value of x. In the above experiment wherein x is 0.55, the optimum z is about 0.20. However, when x is 0.10, the optimum z becomes about 0.35, or when x is 0.33, the optimum z becomes about 0.30.

In all the above cases, it is preferable that most of Co, i.e. 80 % or more remains unoxidized and in a metal state, and then an appreciable part of Fe is oxidized. The range of the optimum z is approximately from 0.10 to 0.40 for the above values of x.

It was found from the spectrum analysis utilizing the Mössbauer effect that the oxidized Fe in these films is FeO. FeO is antiferromagnetic or paramagnetic at an ambient temperature and is not ferromagnetic.

The following is an explanation of an additional metal M in the present invention. The film in the present invention might contain the metal M, but of course it might not contain the same. The additional metal M is at least one metal other than Fe and Co. The metal M is at least one metal selected from the group consisting of Al, Cr, Mo, Ti and Zr. In the case of these five kinds of metal, one can obtain a film having further improved oxidation resistance. The content of the metal M in a film is not more than about 30 atomic % of the total metallic atoms therein.

To use the additional metal M is effective in improving the oxidation-resistance of the perpendicular magnetic anisotropic film, but the perpendicular magnetic anisotropy and the perpendicular coercive force are lowered, if it is used excessively.

When the metal M is uniformly distributed in the perpendicular magnetic anisotropic film, a metal M-content of less than about 1 atom % provides almost no improvement in the oxidation resistance.

However, when the metal M is concentrated on a film surface exposed to the atmosphere by forming a layer containing metal M on the surface or by making a concentration gradient at right angles to the film, the overall metal M content can be lowered to below 1 atom %. For instance, when the local metal M content on the film surface is more than about 1 atom %, a satisfactory improvement in oxidation resistance is obtained even if the overall metal M content is about 0.1 atom %.

The ratio of oxygen atoms in the film, namely "z", in the specification is the value obtained by the X-ray photoelectron spectroscopy (XPS) method from a film surface etched to a depth of about $0.03\mu m$ (300 Å) using an argon-ion-beam, said film then not being exposed to the atmosphere. The above etching is a selective etching, so the value z might differ from that obtained using methods other than the above.

The ratio of a metal component in the film can be obtained using the fluorescence X-ray method, the X-ray microanalyzer (XMA) method, the X-ray photoelectron spectroscopy method, the Auger electron spectroscopy method or the like.

The above descriptions are summarized here. Maximum perpendicular magnetic anisotropy of the perpendicular magnetic anisotropic film of the present invention is obtained when the ratio of the number of Co atoms to the total number of Co atoms and Fe atoms, namely "x", is within a range of 0.01-0.75, and at the same time, about 30 % or more of Fe is in FeO and also the residual Fe and about 80 % or more of Co remain in a metal state.

It is presumed that the perpendicular magnetic anisotropy of the above perpendicular magnetic anisotropic film is provided by virtue of the shaped anisotropy of the film structure wherein metal-state, needle-shaped Fe and Co are disposed at right angles to the film surface and are surrounded by paramagnetic FeO.

It is apparent that the magnetic property of the perpendicular magnetic anisotropic film in the present invention is provided by metal-state Fe and Co, since Fig. 8 shows that with an increasing ratio of oxygen atoms (z), saturation magnetization (Ms) continues to lower. In order to get the magnetic anisotropy it is very important that Co, which is ferromagnetic, is resistant against oxidation compared with Fe.

Except for the metal M, the perpendicular magnetic anisotropic film of the present invention is a film composed of Fe, Co, oxidized Fe and oxidized Co. However, a film substantially consisting of three components, namely Fe, Co and FeO is most preferable.

The perpendicular magnetic anisotropic film of the present invention has sufficient saturation magnetization (Ms), a large enough perpendicular anisotropic magnetic field (Hk) and a proper perpendicular coercive force (Hcl), said properties being required in a perpendicular magnetic storage medium. The film has Ms of 350-1300 kA/m (350-1300 [emu/cm$^3$]), Hk of about 159-478 kA/m (2-6 [kOe]) and Hcl of about 15.9-119.4 kA/m (200-1500 [Oe]). These values are not inferior to those of conventional perpendicular magnetic anisotropic films of Co-Cr alloy.

The perpendicular magnetic anisotropic film of the present invention is superior in the friction coefficient and the wear-resistance thereof to conventional perpendicular magnetic anisotropic films of Co-Cr alloy. This is quite an important characteristic in perpendicular magnetic storage mediums in which the film is contacted with a magnetic head.

Further, by virtue of the existence of the metal M, the perpendicular magnetic anisotropic film has the important advantage of oxidation resistance.

The description given hereinbefore is a macroscopic construction concerning the composition of the perpendicular magnetic anisotropic film of the present invention. The magnetic properties of the film, shown for example in Fig. 8, are provided by virtue of the above macroscopic construction. In addition hereto, the microscopic construction of the film is also important in the present invention.

The following is an explanation of the microscopic construction of the perpendicular magnetic anisotropic film of the present invention.

In order to obtain high recording/reproducing sensitivity, the perpendicular magnetic anisotropic film should not only have the above mentioned magnetic property by satisfying the above-mentioned compositional requirements, but should also be produced under the correct conditions.

When the perpendicular magnetic anisotropic film of the present invention is analyzed by an X-ray diffraction spectrum, two kinds of diffracted X-ray intensity peaks are observed.

It is presumed that one of them is caused by a diffraction due to a lattice plane of miller index (200) having a lattice spacing of $(2.13\text{-}2.16) \cdot 10^{-10}$ m mainly in a cubic crystalline FeO, and another is caused by a diffraction due to a lattice plane of miller index (110) having a lattice spacing of $(2.02\text{-}2.08) \cdot 10^{-10}$ m in Fe, Co, Metal M and their alloys having a body-centered cubic structure.

Peaks other than the above are not observed substantially. This means that the axis ⟨200⟩ is oriented at right angles to the film surface in FeO, while the axis ⟨110⟩ is oriented at right angles to the film surface in a metal phase.

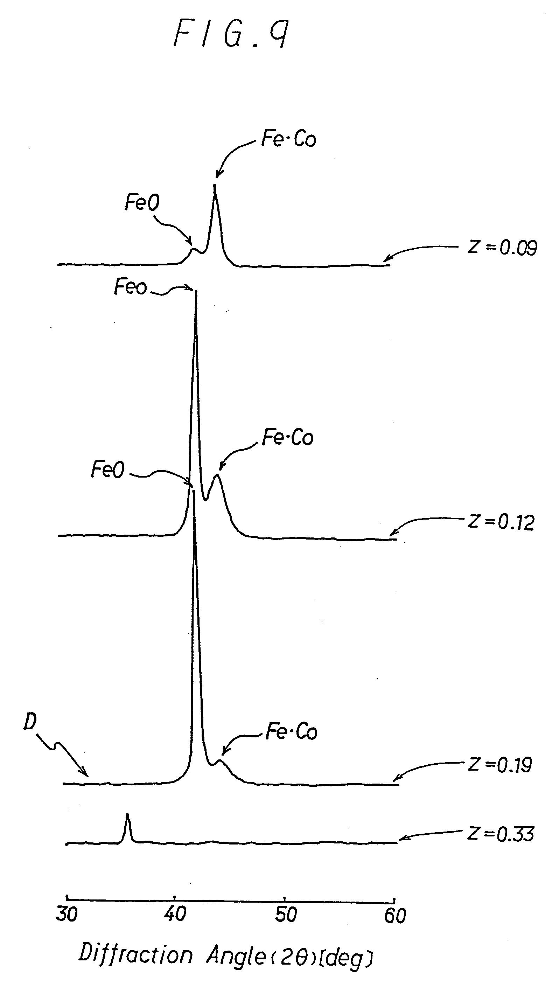

The change in the diffracted X-ray intensity observed using the X-ray diffraction spectrum on the perpendicular magnetic anisotropic films when the ratio of oxygen (z) was varied is shown in Fig. 9. Generally, the perpendicular magnetic anisotropy shows a tendency to increase when the peak of diffracted X-ray intensity caused by FeO is higher than the peak caused by Fe and Co in a metal state. The result of the X-ray diffraction spectrum shown in Fig. 9 does not contradict the result of the analysis using the XPS method shown in Fig. 7a and Fig. 7b.

On the contrary, when a perpendicular magnetic anisotropic film having a composition and magnetic property similar to that of the film according to the present invention, but not having sufficient recording/reproducing sensitivity, is analyzed using the X-ray diffraction spectrum, a different result is obtained: One cannot observe a peak of diffracted X-ray intensity presumably caused by Fe, Co, Metal M or an alloy thereof having a body-centered structure. Further, a peak presumably caused by cubic crystalline FeO is not always observed.

It is presumed that in the perpendicular magnetic anisotropic film of the present invention which has high recording/reproducing sensitivity, the needle-shaped crystals of metal-state Fe, Co and Metal M grow at right angles to the film surface and reach the film surface. On the other hand, in perpendicular magnetic anisotropic films which do not have sufficiently high recording/reproducing sensitivity, needleshaped crystals of metal-state Fe, Co and Metal M grow at right angles to the film surface but do not reach the film surface and are dispersed and buried in the FeO phase.

Therefore, in the perpendicular magnetic anisotropic film of the present invention, it is an essential element that both a peak of diffracted X-ray intensity caused by FeO and a peak of diffracted X-ray intensity caused by metal-state Fe, Co and Metal M be observed in X-ray diffraction spectrum.

The rf-sputtering method or rf-magnetron sputtering method are especially effective in producing a perpendicular magnetic anisotropic film having the above construction.

Next, there is explained a method of producing a perpendicular magnetic anisotropic film of the present invention on a substrate by means of the rf-magnetron sputtering method. The sputtering conditions must be selected adequately in order to obtain a desirable perpendicular magnetic anisotropic film. Low substrate temperature is preferable for producing the film, a range of about -50°C to 100°C is particularly preferable.

The target used in the above sputtering is a composite target of Fe, Co and the metal M; a target of an alloy of these metals; a composite target of these metals, an alloy and an oxide; or the like.

The ratio of oxygen atoms (z) in the perpendicular magnetic anisotropic film, which is preferably within a range of 0.05 to 0.50 determined by the X-ray photoelectron spectroscopy (XPS) method, can be controlled by the partial pressure of oxygen in the sputtering device. The optimum gas pressure in the sputtering device differs depending on the rate of deposition of the film.

When a perpendicular magnetic anisotropic film is produced under inadequate oxygen partial pressure, the peak of the diffracted X-ray intensity caused by metal states is not always observed in the X-ray diffraction spectrum.

The sputtering is carried out under the condition wherein the argon gas pressure is within a range of 0.133-1.33 Pa ($1 \times 10^{-3}$ to $1 \times 10^{-2}$ Torr). The film-forming rate is not limited.

The perpendicular magnetic anisotropic film formed by means of the above mentioned sputtering has sufficient saturation magnetization (Ms), a sufficiently large perpendicular anisotropic magnetic field (Hk), and a proper perpendicular coercive force (Hcl). These values differ depending on the composition. By the above mentioned sputtering method, a perpendicular magnetic anisotropic film having saturation magnetization (Ms) of 350-1300 kA/m (350 to 1300 [emu/$cm^3$]), a perpendicular anisotropic magnetic field (Hk) of 159-478 kA/m (2 to 6 [kOe]) and a perpendicular coercive force (Hcl) of 15.9-119.4 kA/m (200 to 1500 [Oe]) can be easily produced in any film thickness.

In the X-ray diffraction spectrum of the perpendicular magnetic anisotropic film produced by the above mentioned sputtering method, there are observed both a peak of diffracted X-ray intensity caused by FeO and a peak of diffracted X-ray intensity caused by Fe, Co and Metal M in metal states.

The perpendicular magnetic storage medium which employs the perpendicular magnetic anisotropic film produced by the above mentioned method has high recording/reproducing sensitivity.

The perpendicular magnetic anisotropic film of the present invention can be used in a single-layer construction in a storage medium for being recorded/reproduced by a ring head. Further, the film can be used in a double layer construction in a storage medium, wherein a soft magnetic layer is provided between a substrate and the perpendicular magnetic anisotropic film for being recorded/reproduced by a perpendicular head. When the double-layer construction is employed, the perpendicular magnetic anisotropic film of the present invention is not affected by the soft magnetic layer. Therefore, the film of the present invention has a considerable advantage over conventional films of Co-Cr alloy even when used in the double-layer film construction.

The detailed explanation for the above soft magnetic layer is given hereinafter. The soft magnetic layer is permeable to the flux of magnetic induction. The initial magnetic permeability thereof is not lower than 100 and the coercive force is not higher than 796 A/m (10 [Oe]) and often around 79.6 A/m (1 [Oe]). Examples of material of the soft magnetic layer are, for example,

(I) a crystalline substance such as pure iron, silicon steel, various Permalloys, CuNi ferrite, Ni-Zn ferrite, Mn-Zn ferrite and Sendust;

(II) an amorphous alloy such as an alloy comprising either Fe-Co, Co-Zr or Co and Ti, Y, Hf, Nb, Ta, W or the like;

(III) an amorphous alloy comprising a transition metal such as Fe, Co or Ni and a metalloid such as Si, B, P or C; and the like. It is one of the great advantages of the present invention that the anisotropy of the perpendicular magnetic anisotropic film is only slightly affected by the materials mentioned above used for a soft magnetic layer thereunder. The soft magnetic layer of the above-mentioned materials can be deposited by means of the vacuum evaporation method, the sputtering method, or the like. The preferable thickness of the soft magnetic layer, which differs depending on the saturation magnetization and the magnetic permeability thereof, is generally 0.05 to 5μm, and more preferably 0.1 to 1μm. A layer thinner than 0.05μm cannot provide a satisfactory effect and a layer thicker than 5μm is uneconomical since it cannot enhance the effect.

The substrate for the soft magnetic layer and the perpendicular magnetic anisotropic film used in the present invention can for example be a metal plate of aluminium, stainless steel or the like; a plastic plate, sheet or film of polyimide, polyester or the like. A substrate having a softening point of not lower than about 50°C and a thickness of about 10μm to 20 mm can be used in the present invention.

Hereinafter, several embodiments of the present invention are explained.

Example 1

Using a rf-magnetron sputtering device, a soft magnetic layer of Permalloy was formed on a polyimide substrate having a thickness of 50μm, then a perpendicular magnetic anisotropic film of sub-oxides of Fe and Co was formed on the layer.

The Permalloy target used was a disc of $Fe_{14}Ni_{77}Cu_5Mo_4$ alloy having 15.24 cm (6-inch) diameter and thickness of 1 mm. The distance between the target and the substrate was 7 cm. The argon gas pressure in the atmosphere in which the substrate was located was 0.665 Pa (5 x $10^{-3}$ Torr), and the substrate had room temperature. After the surface of the target had been cleaned by sufficient pre-sputtering at a sputtering power of 1 kW, a shutter was opened to carry out sputtering for 10 minutes in order to deposit Permalloy onto the substrate. While the deposition was being carried out, the substrate was kept rotating above the target at a rate of 10 revolutions per minute. The obtained soft magnetic film was partially sampled and the thickness thereof was measured by a styrus step monitor to be 0.49μm (4900 Å).

From a magnetization curve measured by a vibrating-sample-magnetometer, it was found that the perpendicular coercive force was 71,64 A/m (0.9 [Oe]), saturation magnetization was 550 kA/m (550 [emu/cm³]) and the initial magnetic permeability was 1100. The magnetic anisotropy of the soft magnetic film was not observed.

The target was then replaced by a composite target comprising an Fe plate having a 15.24 cm (6-inch) diameter and a thickness of 1 mm and small Co plates placed thereon. A perpendicular magnetic anisotropic film of sub-oxides of Fe and Co was formed on the above-mentioned soft magnetic film of Permalloy. The argon gas pressure in the atmosphere in which the substrate was located was 0.400 Pa (3 x $10^{-3}$ Torr). The added oxygen pressure was 0.06 Pa (4.5 x $10^{-4}$ Torr), and the substrate had room temperature. After the surface of the target had been cleaned by sufficient presputtering at the sputtering power of 2 kW, a shutter was opened to carry out sputtering for 2 minutes in order to form a perpendicular magnetic anisotropic film on the Permalloy. The thickness of the obtained perpendicular magnetic anisotropic film was measured by a styrus step monitor to be 0.12μm 1200Å. The perpendicular magnetic anisotropic film without the Permalloy was sampled and analyzed by an X-ray microanalyzer (XMA). It was then found that the ratio (x) of the number of Co atoms to the total number of Fe atoms and Co atoms was 0.33. Further by means of X-ray photoelectron spectroscopy (XPS) it was found that the ratio (z) of the number of oxygen atoms to the total number of atoms in the perpendicular magnetic anisotropic film was 0.28. The examination regarding the degree of oxidation of Fe and Co was carried out on the basis of the obtained spectrum of XPS. It was then found that an appreciable part of Fe (about 50 %) was oxidized and most of Co (more than 90 %) remained in a metal state.

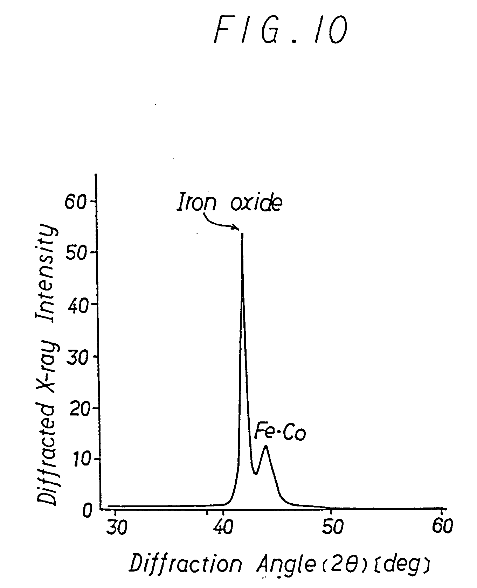

The result of the X-ray diffraction spectrum obtained from the perpendicular magnetic anisotropic film without the Permalloy of the above example is shown in Fig. 10. The X-ray diffraction spectrum was obtained by using an X-ray tube having a copper anode and selecting an accelerating voltage of 40 kV together with a current of 60 mA. It is presumed that a peak of diffracted X-ray intensity observed adjacent to the diffraction angle $2\theta = 42.0°$ in Fig. 10 is caused by a lattice in FeO having a lattice spacing of $(2.13$ to $2.16) \cdot 10^{-10}$ m. Another peak observed adjacent to the diffraction angle $2\theta = 44.4°$ in Fig. 10 is caused by a lattice in metal state Fe and Co having a lattice spacing of $(2.02$ to $2.08) \cdot 10^{-10}$ m.

In Fig. 10 one can recognize both a peak caused by FeO and a peak caused by metal-state Fe and Co of diffracted X-ray intensity in the X-ray diffraction spectrum of the above perpendicular magnetic anisotropic film. Therefore, Example 1 satisfies the elementary requirement in the microscopic construction of the perpendicular magnetic anisotropic film of the present invention.

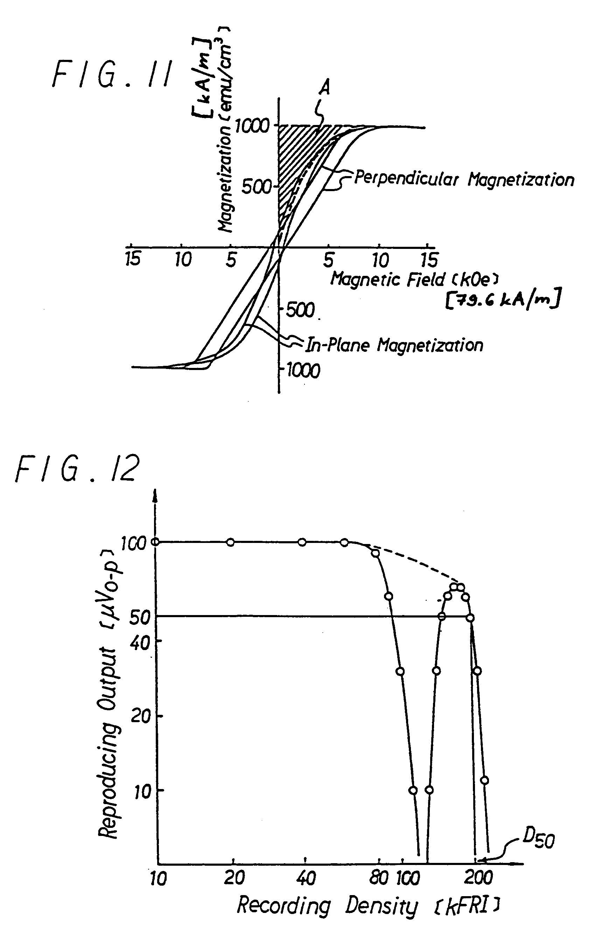

Fig. 11 shows the magnetic hysteresis curve of the perpendicular magnetic anisotropic film of Example 1. It was measured from the perpendicular magnetic anisotropic film of the above example that saturation magnetization (Ms) was 1000 kA/m (1000 [emu/cm$^3$]) and the perpendicular coercive force (Hcl) was 70.05 kA/m (880 [Oe]). The magnetic anisotropic energy Ku derived from the magnetic hysteresis curve was 0.164 J/cm$^3$ ($1.64 \times 10^6$ [erg/cm$^3$]). The magnetic anisotropic energy Ku can be obtained by calculating the shaded area A in Fig. 11. Said area is enclosed by an inplane initial magnetization curve (shown by a dotted line in Fig. 11), the Y-axis (ordinate, which represents the magnetization intensity) and a line starting from the point of saturation magnetization on the y-axis. Said line is parallel to the x-axis (abscissa) which represents the magnetic field intensity. The perpendicular anisotropic magnetic field (Hk) calculated by the correlation Hk = 2 Ku/Ms was 262.7 kA/m (3.3 [kOe]).

The correlation between the linear recording density and the reproducing output of the perpendicular magnetic storage medium of Example 1 was measured by using a tester equipped with a perpendicular magnetic head. The magnetic head had an auxiliary magnetic pole. The main magnetic pole of the magnetic head had a thickness of 0.3µm, a width of 200µm and a coil turn of 50. The driving speed of the perpendicular magnetic storage medium was 2 m/sec and the recording current was 10 mA during measurement. The correlation obtained between the linear recording density and the reproducing output is illustrated in Fig. 12.

Fig. 12 shows that the reproducing output of the perpendicular magnetic anisotropic film of the present invention is 100 [µVo-p] at low linear recording density. This is a very high value for the reproducing output.

Fig. 12 also shows that the recording output is lost at a linear recording density of about 120 [kFRI]. This phenomenon is caused by a loss due to the film thickness of the magnetic head. Here, $D_{50}$ is defined as the linear recording density at which the reproducing output is a half of the output of that at the above low linear recording density. This is based on the envelope shown by the dotted curve in Fig. 12, the above phenomenon being neglected. $D_{50}$ of the perpendicular magnetic anisotropic film of the present invention is about 200 [kFRI], which is a very high value. This result confirms that Example 1 provides a sufficient reproducing output, even at the very high linear recording density of over 150 [kFRI].

Comparative Example 1

A perpendicular magnetic storage medium having a double-layer construction was produced by the same procedure as in Example 1 except that an added oxygen pressure was selected at 0.064 Pa ($4.8 \times 10^{-4}$ Torr). The thickness of the obtained perpendicular magnetic anisotropic film was 0.13µm (1300 Å) and the ratio (z) of the number of oxygen atoms to the total number of atoms in the film measured using the XPS method was 0.35. By measuring the magnetic characteristics of the perpendicular magnetic anisotropic film of Comparative Example 1, it was found that saturation magnetization (Ms) was 420 kA/m (420 emu/cm$^3$), the perpendicular coercive force (Hcl) was 35.8 kA/m (450 Oe) the perpendicular anisotropic magnetic field (Hk) was 318 kA/m (4.0 kOe). Accordingly the film had satisfactory magnetic characteristics.

However, the result of the X-ray diffraction spectrum of Comparative Example 1 was different from that of Example 1. Although a peak of the diffracted X-ray adjacent to the diffraction angle $2\theta = 42.0°$ caused by FeO was observed, a peak adjacent to a diffraction angle $2\theta = 44.4°$ caused by metal state Fe and Co was not observed.

The correlation between the linear recording density and the reproducing output was examined using the same method as in Example 1. The measured reproducing output at low linear recording density was 25 [$\mu$Vo-p] and $D_{50}$ was 80 [kFRI]. Therefore, Comparative Example 1 could not provide sufficient recording/reproducing sensitivity. The reason is presumably due to the fact that Comparative Example 1 does not satisfy the previously mentioned requirement in the microscopic construction.

## Example 2

A perpendicular magnetic storage medium was produced using the same procedure as in Example 1, except that the compositional ratio of Fe and Co was modified.

The obtained perpendicular magnetic anisotropic film of Example 2 had a thickness of 0.12$\mu$m (1200 Å). The ratio (x) of the number of Co atoms to the total number of Fe atoms and Co atoms analyzed using the XMA method was 0.55, and the ratio (z) of the number of oxygen atoms to the number of atoms in the film measured using the XPS method was 0.19. The degrees of ionizations of Fe and Co were determined by the XPS spectrum as shown by spectrum C in Fig. 7a and Fig. 7b, respectively. In Example 2, about 40 % of Fe was oxidized and more than 90 % of Co remained in a metal state. This result corresponds to column z = 0.19 in Table 1.

The magnetic properties of the perpendicular magnetic anisotropic film of Example 2 correspond to the values of z = 0.19 in Fig. 8. Saturation magnetization (Ms) was 600 kA/m (600 [emu/cm$^3$]), the perpendicular coercive force (Hcl) was 39.8 kA/m (500 [Oe]) and the perpendicular anisotropic magnetic field (Hk) was 398 kA/m (5 [kOe]).

The contacting angle, the kinetic friction coefficient and wear-resistance were measured. The contacting angle was measured using water as described, for example, in Shin-jikkenkagaku-kouza, Vol. 18, Interface and Colloid, pp 93-106, 1977 published by Maruzen Kabushiki Kaisha. The kinetic friction coefficient was measured in accordance with the ASTM-D3028 method. During this measurement-procedure, the sample was fixed on a turn table and there were used a Westover type frictionometer and a fixed sample of a heat-resistant glass disc grinded by an abrasive cloth having a particle size of 0.3$\mu$m. The kinetic friction coefficient mentioned had a value at 30 seconds after rotation of the sample, the vertical load being 50 kg and the rotating speed 50 cm/sec. The wear-resistance was looked into subsequent to the kinetic friction coefficient measurement by inspecting the surface of the sample after 1000 revolutions of the turn table. As a result of the above measurements, it was found that the contacting angle was 64.1°, the kinetic friction coefficient was 0.34 and the surface was not damaged. In a similar measurement for conventional perpendicular magnetic anisotropic films of Co-Cr alloy, it was found that the contacting angle was about 45°, the kinetic friction coefficient was 0.5 to 0.6 and the surface was heavily damaged. Therefore, it is apparent that the film of the present invention has great advantages over the conventional one.

The result of the X-ray diffraction spectrum of Example 2 is shown as spectrum (D) in Fig. 9. In the spectrum, both a peak caused by FeO and a peak caused by metal state Fe and Co are observed.

A test similar to that described in Example 1 was carried out to determine the recording/reproducing sensitivity of the perpendicular magnetic storage medium of Example 2. The reproducing output at low linear recording density was 100 [$\mu V_{0-p}$] and $D_{50}$ was 200 [kFRI]. The result proved that the recording/reproducing sensitivity of Example 2 was satisfactory.

## Example 3

The perpendicular magnetic storage medium of Example 3 was produced using the same procedure as in Example 1, except that a polyethylene terephthalate (PET) substrate of a thickness of 75$\mu$m was used instead of the polyimide substrate of a thickness of 50$\mu$m and the compositional ratio of Fe and Co was modified.

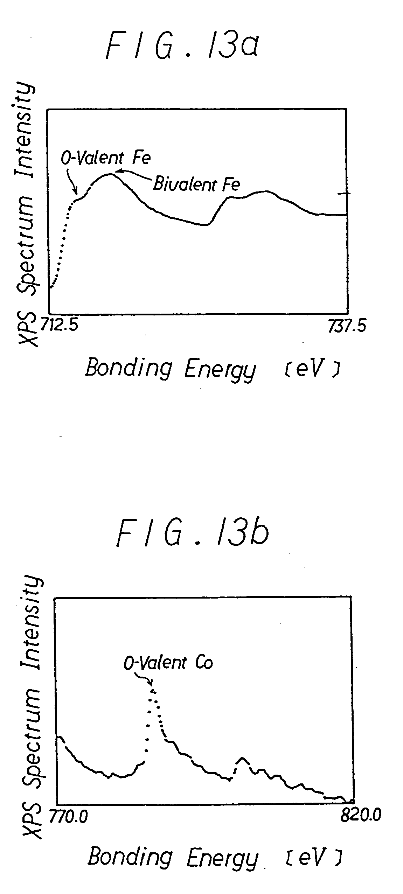

The obtained perpendicular magnetic anisotropic film had a thickness of 0.12$\mu$m (1200 Å). The ratio (x) of the number of Co atoms to the total number of Fe atoms and Co atoms analyzed using the XMA method was 0.10. The ratio (z) of the number of oxygen atoms to the number of atoms in the film measured using the XPS method was 0.35. The result of the analysis using the XPS method is shown in Fig. 13a and Fig. 13b. From these figures it can be seen that most of Fe is in FeO and the residual Fe and Co remain in a metal state.

The magnetic properties of the perpendicular magnetic anisotropic film of Example 3 were examined using the same method as in Example 1. Saturation magnetization (Ms) was 580 kA/m (580 [emu/cm$^3$]), the perpendicular coercive force (Hcl) was about 55.72 kA/m (700 [Oe]) and the perpendicular anisotropic magnetic field (Hk) was 318.4 kA/m (4.0 [kOe]).

In the X-ray diffraction spectrum of Example 3, both a peak caused by FeO and a peak caused by metal state Fe and Co were seen.

Further, a test similar to that described in Example 1 was carried out to determine the recording/reproducing sensitivity of the perpendicular magnetic storage medium of Example 3. The recording output at low linear recording density was 100 [$\mu V_{o-p}$] and $D_{50}$ was 200 [kFRI]. The results proved that the recording/reproducing sensitivity of Example 3 was satisfactory.

Comparative Example 2

A soft magnetic layer of Permalloy was formed on a polyimide substrate having a thickness of 50$\mu$m using the same procedure as in Example 1. The magnetic properties of the obtained soft magnetic layer were similar to those of Example 1.

Then, using DC magnetron sputtering equipment, a perpendicular magnetic anisotropic film of a sub-oxide of Fe-Co was formed on the soft magnetic layer using the same composite target as in Example 1. The argon gas pressure in the atmosphere in which the substrate was located was 0.4 Pa (3 x $10^{-3}$ Torr), the added oxygen pressure was 0.101 Pa (7.6 x $10^{-4}$ Torr), and the substrate had room temperature. After the surface of the target had been cleaned by sufficient pre-sputtering at a sputtering power of 900 W, a shutter was openend to carry out sputtering for 4 minutes in order to form a perpendicular magnetic anisotropic film on to the Permalloy. The thickness of the formed perpendicular magnetic anisotropic film was measured by a styrus step monitor to be 0.15$\mu$m (1500 Å).

The perpendicular magnetic anisotropic film without the Permalloy was sampled and analyzed using the XMA method. It was then found that the ratio (x) of the number of Co atoms to the total number of Fe atoms and Co atoms was 0.33. Using the XPS method it was further found that the ratio (z) of the number of oxygen atoms to the total number of atoms in the perpendicular magnetic anisotropic film was 0.30. The examination regarding the degree of oxidation of Fe and Co was carried out on the basis of the obtained spectrum of XPS. It was then found that some of Fe (about 50 %) was oxidized and most of Co (more than 90 %) remained in a metal state.

By measuring the magnetic characteristics of the perpendicular magnetic anisotropic film of Comparative Example 2, it was found that saturation magnetization (Ms) was 700 kA/m (700 emu/cm$^3$), the perpendicular coercive force (Hcl) was 39.8 kA/m (500 Oe) and the perpendicular anisotropic magnetic field (Hk) was 278.6 kA/m (3.5 kOe). Accordingly the film had satisfactory magnetic characteristics.

However, the result of the X-ray diffraction spectrum of this Comparative Example 2 was different from the result of Example 1: Neither a peak of the diffracted X-ray presumably caused by cubic crystalline FeO nor a peak presumably caused by metal-state Fe and Co were observed.

The correlation between the linear recording density and the reproducing output was looked into using the same method as in Example 1. The measured reproducing output at low linear recording density was 20 [$\mu$Vo-p] and $D_{50}$ was 70 [kFRI].

Examples 4-9 and Comparative Examples 3-5

Eight perpendicular magnetic storage mediums, i.e. Examples 5 to 9 and Comparative Examples 3 to 5, were produced. In each production, a perpendicular magnetic anisotropic film was formed on a glass substrate having a thickness of 1 mm. The perpendicular magnetic anisotropic films comprise sub-oxides of metal mixtures wherein one of the metals Al, Cr, Mo, Ti and Zr was added in a different ratio (y) to Fe and Co. The targets used were composite targets comprising an Fe disc having a diameter of 7.62 cm (3 inches) and a thickness of 0.5 mm, small Co plates having a dimension of 10 mm$^2$ and small plates of Al, Cr, Mo, Ti or Zr having a dimension of 10 mm$^2$. The distance between the substrate and the target was 5 cm. The argon gas pressure in the atmosphere in which the substrate was located was 0.4 Pa (3 x $10^{-3}$ Torr), the added oxygen pressure was 0.06 Pa (4.5 x $10^{-4}$ Torr) and the substrate had room temperature. After the surface of the target had been cleaned by sufficient pre-sputtering, a shutter was opened to carry out sputtering for 1 minute at a sputtering power of 400 W in order to form a perpendicular magnetic anisotropic film on the substrate.

Further, for comparison with Example 5, the perpendicular magnetic storage medium of Example 4 was produced, wherein a perpendicular magnetic anisotropic film of sub-oxides of Fe and Co only was formed in the same manner as in Examples 5 to 9.

The thickness of the films obtained in Examples 4 to 9 and Comparative Examples 3 to 5 were measured by a styrus step monitor. The compositions thereof were determined by the X-ray photoelectron spectrum (XPS) method and the X-ray microanalysis (XMA) method. Saturation magnetization (Ms) and the perpendicular coercive force thereof were measured using a vibrating-sample-magnetometer.

The results of the above measurement for Examples 4 to 9 and Comparative Examples 3 to 5 are shown in Table 2.

In Table 2 it can be seen that a perpendicular magnetic anisotropic film containing more than 30 atm % of the metal M has too low a perpendicular coercive force and neglegibly low perpendicular magnetic anisotropy.

As the result of the X-ray diffraction spectra of the perpendicular magnetic anisotropic films of Examples 4 to 9, both a peak caused by FeO and a peak caused by metal-state Fe and Co were observed in all samples.

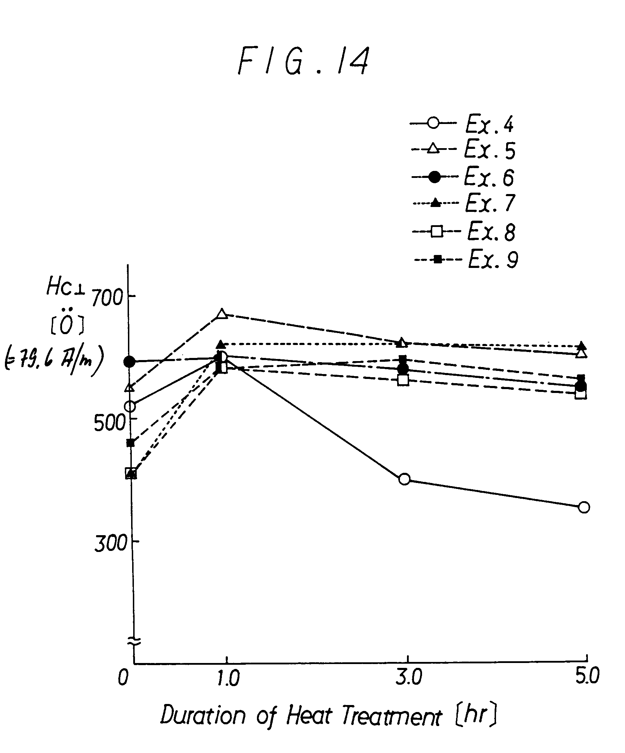

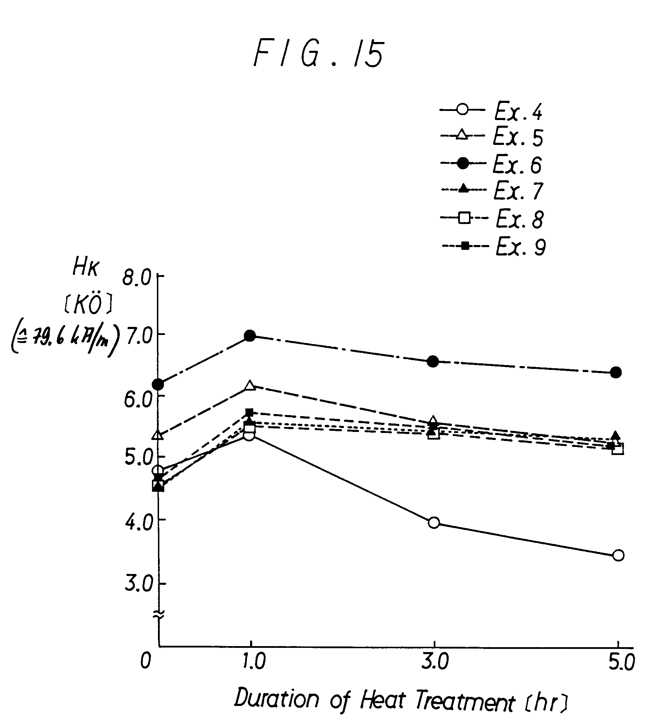

Next, the perpendicular magnetic anisotropic films of Examples 4 to 9 were heat-treated at 240°C in the atmosphere. The oxidation resistances thereof were then examined. The correlations between the length of heat-treatment and the perpendicular coercive forces (Hcl) of the perpendicular magnetic anisotropic films are shown in Fig. 14. The correlations between the length of heat-treatment and the perpendicular anisotropic magnetic fields (Hk) are shown in Fig. 15.

From Fig. 14 and Fig. 15, it is found that adding the metal M to Fe and Co improves the oxidation resistance of the perpendicular magnetic anisotropic film.

Example 10

The perpendicular magnetic storage medium of Example 10 was produced in the same way as in Example 1 except for the use of a composite target of Fe plate having a diameter of 15.24 cm (6 inches) and a thickness of 1 mm and small plates of Co and Ti disposed thereon in the deposition of the perpendicular magnetic anisotropic film.

The perpendicular magnetic anisotropic film obtained had a thickness of 0.12$\mu$m (1200 Å). The ratio (x) of the number of Co atoms to the total number of Fe atoms and Co atoms analyzed using the XMA method was 0.30, the ratio (y) of Ti atoms analyzed using the XMA method was 0.08 and the ratio (z) of the number of oxygen atoms to the number of atoms in the film measured by XPS method was 0.31.

The magnetic properties of the perpendicular magnetic anisotropic film of Example 10 were looked into. Saturation magnetization (Ms) was 710 kA/m (710 [emu/cm$^3$]), the perpendicular coercive force (Hcl) was about 46.2 kA/m (580 [Oe]) and the perpendicular anisotropic magnetic field (Hk) was 493.5 kA/m (6.2 [kOe]).

In the X-ray diffraction spectrum of Example 10, both a peak caused by FeO and a peak caused by metal-state Fe and Co were seen.

Further, a test similar to that described in Example 1 was carried out to determine the recording/reproducing sensitivity of the perpendicular magnetic storage medium of Example 10. The recording output at low linear recording density was 100 [$\mu V_{o-p}$] and $D_{50}$ was 200 [kFRI].

## Table 2

| Sample No. | Film thickness [Å] $[10^{-4}\mu m]$ | Composition $[(Fe_{1-x}Co_x)_{1-y}M_y]_{1-z}O_z$ [ratio in atoms] | | | | Magnetic properties | | |
|---|---|---|---|---|---|---|---|---|
| | | M ; y | 1-x | x | z | Hc⊥[Oe] $[\cdot 79.6\,A/m]$ | Hk [kOe] $[\cdot 79.6\,kA/m]$ | Ms[emu/cm³] $[kA/m]$ |
| (Ex-4) | 2,000 | ---- | 0.65 | 0.35 | 0.28 | 520 | 4.8 | 600 |
| (Ex-5) | 1,500 | Cr ; 0.06 | 0.70 | 0.30 | 0.30 | 550 | 5.4 | 490 |
| (Ex-6) | 2,000 | Ti ; 0.08 | 0.70 | 0.30 | 0.32 | 590 | 6.2 | 720 |
| (Ex-7) | 2,500 | Aℓ ; 0.08 | 0.71 | 0.29 | 0.30 | 410 | 4.6 | 790 |
| (Ex-8) | 2,500 | Mo ; 0.08 | 0.71 | 0.29 | 0.30 | 410 | 4.6 | 700 |
| (Ex-9) | 2,000 | Zr ; 0.08 | 0.71 | 0.29 | 0.31 | 470 | 4.7 | 750 |
| (CEx-3) | 2,000 | Cr ; 0.34 | 0.74 | 0.26 | 0.25 | 150 | low | |
| (CEx-4) | 2,000 | Ti ; 0.34 | 0.60 | 0.40 | 0.24 | 30 | low | |
| (CEx-5) | 2,000 | Aℓ ; 0.32 | 0.70 | 0.30 | 0.36 | 180 | low | |

Ex : Example

CEx : Comparative Example

The perpendicular magnetic storage medium of the present invention can utilize a low heat-resistant and inexpensive substrate because the film thereof can be produced at a relatively low temperature compared with conventional mediums using Co-Cr perpendicular magnetic anisotropic films. Thus a high density perpendicular magnetic storage medium can be produced at a low cost.

13

Further, since the perpendicular magnetic anisotropic film of the present invention has an oxidized surface, a perpendicular magnetic storage medium having sufficient wear resistance without needing additional surface protection is provided.

Still further, since the perpendicular magnetic anisotropic film of the present invention utilizes a sub-oxide having a composition suitable for the specific use, a perpendicular magnetic storage medium having high saturation magnetization and perpendicular magnetic anisotropy and a proper perpendicular coercive force is provided.

The perpendicular magnetic anisotropic film in accordance with the present invention has a microscopic construction wherein both a peak of the diffracted X-ray intensity presumably caused by FeO and a peak presumably caused by metal-state Fe and Co and Metal M are observed in the X-ray diffraction spectrum. By virtue hereof, the perpendicular magnetic storage medium of the present invention has much higher recording/reproducing sensitivity than conventional perpendicular magnetic storage mediums using a sub-oxide of Fe-Co in the different microscopic construction.

Further, the perpendicular magnetic storage medium contains an additional metal, which is at least one among Al, Cr, Mo, Ti, Zr and the like excluding Fe and Co. This provides improved oxidation resistance in comparison to perpendicular magnetic storage mediums having perpendicular magnetic anisotropic films of a sub-oxide of Fe-Co only. The addition of the above metals, i.e. Al, Cr, Mo, Ti, Zr or the like, to Fe and Co does not degrade the magnetic properties, i.e., saturation magnetization, perpendicular magnetic anisotropy, wear-resistance or the like, of the perpendicular magnetic anisotropic film.

Still further, when a double-layer construction, wherein a soft magnetic layer is provided as the base of the perpendicular magnetic anisotropic film, is applied to the perpendicular magnetic storage medium in order to enhance the recording/reproducing sensitivity of the same, the perpendicular magnetic anisotropic film in accordance with the present invention entails less reciprocal restrictions between the soft magnetic layer and the film itself.

## Claims

**1.** A perpendicular magnetic storage medium comprising a substrate and a perpendicular magnetic anisotropic film formed on the substrate, characterized in that the perpendicular magnetic anisotropic film is a film of a sub-oxide of a metal having a composition described by the general formula [-$(Fe_{1-x}Co_x)_{1-y}M_y]_{1-z}O_z$ (where $0.01 \leq x \leq 0.75$, $0 < y \leq 0.30$, $0.05 \leq z \leq 0.50$ and M means at least one metal selected from the group consisting of Al, Cr, Mo, Ti and Zr; said film having an easy magnetization axis being perpendicular to the plane of the film and an X-ray diffraction spectrum having both a peak of diffracted X-ray intensity caused by oxidized Fe and a peak of diffracted X-ray intensity caused by metal-state Fe and Co and Metal M; said medium having a saturation magnetization value not less than 350 kA/m (350 emu/cm$^3$).

**2.** The medium of Claim 1, wherein more than 80 % of Co remains in a metal state and more than 30 % of Fe is in FeO.

**3.** The medium of Claim 1 or 2, wherein the perpendicular magnetic anisotropic film is a film formed by means of the rf-sputtering method or the rf-magnetron sputtering method.

**4.** The medium of any one of Claims 1 to 3, wherein a soft magnetic layer having an initial magnetic permeability of not lower than 100 and a coercive force of not higher than 796 A/m (10 Oe) is formed between the substrate and the perpendicular magnetic anisotropic film.

## Patentansprüche

**1.** Ein senkrecht magnetisches Speichermedium bestehend aus einem Substrat und einem auf dem Substrat gebildeten, senkrecht magnetischen, anisotropen Film, dadurch gekennzeichnet, daß der senkrecht magnetische, anisotrope Film ein Film eines Suboxids eines Metalls mit einer Zusammensetzung ist, die durch die allgemeine Formel [$(Fe_{1-x}Co_x)_{1-y}M_y]_{1-z}O_z$ (wobei $0,01 \leq x \leq 0,75$, $0 < y \leq 0,30$, $0,05 \leq z \leq 0,50$ und M mindestens ein Metall, ausgewählt aus der Gruppe bestehend aus Al, Cr, Mo, Ti und Zr bedeutet) beschrieben wird, wobei der Film eine leichte Magnetisierungsachse senkrecht zur Filmebene und ein Röntgenstreuspektrum besitzt, das sowohl einen Peak der gestreuten Röntgenintensität, der durch oxidiertes Fe als auch einen Peak der gestreuten Röntgenintensität, der durch metallines Fe und Co und Metall M hervorgerufen wird; wobei das Medium einen Wert der Sättigungsmagnetisierung von nicht weniger als 350 kA/m ( 350 emu/cm$^3$) besitzt.

2. Das Medium nach Anspruch 1, bei dem mehr als 80 % des Co im metallinen Zustand bleibt und mehr als 30% des Fe im FeO enthalten ist.

3. Das Medium nach Anspruch 1 oder 2, bei dem der senkrecht magnetische, anisotrope Film ein Film ist, der mittels rf-Sputterverfahren oder rf-Magnetron-Sputterverfahren gebildet wird.

4. Das Medium nach einem der Ansprüche 1 bis 3, bei dem zwischen dem Substrat und dem senkrecht magnetischen, anisotropen Film eine weichmagnetische Schicht mit einer magnetischen Anfangspermeabilität von nicht weniger als 100 und einer Koerzitivkraft von nicht höher als 796 A/m (10 Oe) gebildet wird.

**Revendications**

1. Milieu de stockage magnétique perpendiculaire comprenant un substrat et un film anisotrope magnétique perpendiculaire formé sur le substrat, caractérisé en ce que le film anisotrope magnétique perpendiculaire est un film d'un sous-oxyde d'un métal ayant une composition décrite par la formule générale $[(Fe_{1-x}Co_x)_{1-y}M_y]_{1-z}O_z$(où $0,01 \leq x \leq 0,75$, $0 < y \leq 0,30$, $0,05 \leq z \leq 0,50$ et M signifie au moins un métal choisi dans le groupe comprenant Al, Cr, Mo, Ti et Zr); ledit film comportant un axe aisé de magnétisation perpendiculaire au plan du film et un spectre de diffraction de rayons X comportant à la fois un pic d'intensité de rayons X diffractés provoqué par le Fe oxydé et un pic d'intensité de rayons X diffractés provoqué par le Fe et le Co à l'état métallique et le métal M; le milieu susdit comportant une valeur de magnétisation de saturation non inférieure à 350 kA/m (350 emu/cm$^3$).

2. Milieu suivant la revendication 1, dans lequel plus de 80 % de Co restent à l'état métallique et plus de 30 % de Fe restent sous la forme de FeO.

3. Milieu suivant l'une ou l'autre des revendications 1 et 2, dans lequel le film anisotrope magnétique perpendiculaire est un film formé au moyen de la méthode de pulvérisation rf ou de la méthode de pulvérisation au magnétron rf.

4. Milieu suivant l'une quelconque des revendications 1 à 3, dans lequel une couche magnétique douce ayant une perméabilité magnétique initiale non inférieure à 100 et une force coercitive de pas plus de 796 A/m (10 Oe) est formée entre le substrat et le film anisotrope magnétique perpendiculaire.

FIG. 1

O₂ Partial Press.: 0.060 Pa ($4.5 \times 10^{-4}$ [Torr])

$M_S$ $\left(\dfrac{emu}{cc}\right)$ [kA/m]

Co/(Fe+Co)  (atomic ratio, x)

FIG. 2

$O_2$ Partial Press.: $4.5 \times 10^{-4}$ (Torr)

$H_C$ [Ö] (=79.6 $A/m$)

Co/(Fe+Co)    (atomic ratio, $x$)

F I G . 3

$H_k$ 6.0

$(k\ddot{o})$

$(=79.6\ kA/m)$

3.0

$O_2$ Partial Press.: $4.5 \times 10^{-4}$ (Torr)

0

0.5

1.0

Co/(Fe+Co)    (atomic ratio, $x$ )

EP 0 238 047 B1

FIG.4

EP 0 238 047 B1

FIG.5

$x : 0.3$

$M_s$

$\left[ \dfrac{emu}{cc} \right]$

$[kA/m]$

1000

500

0

0.10   0.20   0.30   0.40   0.50   0.60

Oxygen Content (atomic ratio, $z$)

EP 0 238 047 B1

FIG. 6

EP 0 238 047 B1

## F I G . 7a

## FIG. 7b

# F I G. 8

# F I G . 9

Diffraction Angle (2θ) [deg]

# FIG. 10

# FIG. 11

Magnetization (emu/cm³) [kA/m]

A

1000

500

Perpendicular Magnetization

15  10  5        5  10  15

Magnetic Field (kOe)
[79.6 kA/m]

500

In-Plane Magnetization

1000

# FIG. 12

Reproducing Output (μV_o-p)

100

50
40

20

10

D_50

10  20  40  80 100  200

Recording Density (kFRI)

## F I G . 13a

## F I G . 13b

28

FIG. 14

# FIG. 15